Europäisches Patentamt

(19) European Patent Office

Office européen des brevets

(11) Numéro de publication: **0 199 623**
**B1**

(12) **FASCICULE DE BREVET EUROPEEN**

(45) Date de publication du fascicule du brevet:
**27.12.89**

(51) Int. Cl.⁴: **F16D 13/75**

(21) Numéro de dépôt: **86400724.0**

(22) Date de dépôt: **04.04.86**

(54) Timonerie de commande pour dispositif d'accouplement, embrayage par exemple, notamment pour véhicule automobile.

(30) Priorité: **05.04.85 FR 8505252**

(43) Date de publication de la demande:
**29.10.86 Bulletin 86/44**

(45) Mention de la délivrance du brevet:
**27.12.89 Bulletin 89/52**

(84) Etats contractants désignés:
**DE FR IT**

(56) Documents cités:
**DE-A- 3 504 708**
**FR-A- 2 094 619**
**FR-A- 2 444 972**
**FR-A- 2 544 428**
**GB-A- 1 080 815**
**GB-A- 2 018 934**

(73) Titulaire: **VALEO, 64 Avenue de la Grande Armée,
F-75017 Paris(FR)**

(72) Inventeur: **Focqueur, Hervé, 6 Allée des Fonds de Fretay,
F-95130 Franconville(FR)**
Inventeur: **Jumel, Bernard, 13 Rue Nungesser et Coli,
F-93380 Pierrefitte(FR)**

(74) Mandataire: **CABINET BONNET-THIRION, 95 Boulevard
Beaumarchais, F-75003 Paris(FR)**

ACTORUM AG

**Description**

La présente invention concerne d'une manière générale la commande d'un quelconque dispositif d'accouplement, et elle vise plus particulièrement le cas où ce dispositif d'accouplement est un embrayage, notamment pour véhicule automobile.

Ainsi qu'on le sait, l'embrayage d'un véhicule automobile est normalement en état d'engagement, disque de friction serré entre un plateau de pression et un plateau de réaction, et, pour sa commande en dégagement, c'est-à-dire pour le desserrage de son disque de friction, il est sous le contrôle d'un organe de commande à la disposition de l'usager, en pratique une pédale actionnable au pied, une timonerie de commande étant à cet effet établie entre, d'une part, un tel organe de commande, et, d'autre part, un organe d'action, communément appelé butée de débrayage, propre, lui, à agir sur le dispositif débrayeur que comporte usuellement tout embrayage pour un tel passage en état de dégagement.

Ainsi qu'on le sait, également, la timonerie de commande ainsi mise en oeuvre entre l'organe de commande et l'organe d'action est adaptée à être attelée à un moyen de manoeuvre asservi audit organe de commande et comporte usuellement, pour élément de sortie, un levier, communément appelé fourchette de débrayage, qui, monté pivotant sur un support, est propre à agir sur l'organe d'action, et est donc ainsi apte à l'actionnement du dispositif d'accouplement à commander.

Lorsque, comme cela est le cas pour un embrayage, ce dispositif d'accouplement met en oeuvre des garnitures de frottement, il se produit, en service, une usure de celles-ci.

Il en résulte intempestivement un déplacement progressif de la position de repos de l'organe d'action et, donc, une augmentation de la course nécessaire à l'organe de commande pour le passage de l'état d'engagement à l'état de dégagement du dispositif d'accouplement commandé.

Pour pallier cet inconvénient, il a déjà été proposé d'incorporer à la timonerie de commande correspondante, en amont du levier formant l'élément de sortie de celle-ci, dit ci-après par simple commodité levier de sortie, un rattrapeur d'usure.

C'est le cas, par exemple, dans le brevet français déposé le 26 Juin 1970 sous le No 70.23840 et publié sous le No 2.094.619.

Mais, le plus souvent à ce jour, dans les réalisations correspondantes, le levier de sortie de la timonerie de commande, c'est-à-dire, en pratique, s'agissant de la commande d'un embrayage, la fourchette de débrayage, est déportée latéralement par rapport au reste de cette timonerie de commande, et, notamment, par rapport au rattrapeur d'usure qui lui est associé.

Bien qu'une telle disposition donne satisfaction, elle présente l'inconvénient, d'une part d'être à l'origine d'une sollicitation en torsion de l'arbre assurant la liaison entre le levier de sortie et le rattrapeur d'usure, et d'autre part de ne convenir en pratique qu'à des cas d'application particuliers propres à se satisfaire des conditions différentes d'implantation alors à respecter pour le levier de sortie et le rattrapeur d'usure.

Dans le brevet anglais No 1.080.815, cependant, le rattrapeur d'usure est globalement disposé dans l'alignement du levier de sortie de la timonerie de commande concernée, ledit rattrapteur d'usure comportant lui-même un levier, ou levier d'actionnement, qui, articulé audit levier de sortie, est apte à être solidarisé à celui-ci par l'intermédiaire de moyens d'encliquetage débrayables.

Mais, outre que, dans ce brevet anglais, la réalisation proposée est relativement complexe, avec, s'agissant de la commande d'un embrayage, la nécessité d'une fourchette de débrayage particulière, et qu'elle met en oeuvre un grand nombre de pièces, avec, notamment, en sus du levier d'actionnement du rattrapeur d'usure, et du levier de sortie formant l'élément de sortie de l'ensemble, un troisième levier, qui est destiné à être attelé au moyen de manoeuvre concerné, et qui forme donc l'élément d'entrée dudit ensemble, le problème se pose d'une bonne démultiplication pour le rattrapeur d'usure, nécessaire pour l'obtention d'un rattrapage d'usure fin, et, donc, d'un fonctionnement précis.

La présente invention à d'une manière générale pour objet une disposition permettant de satisfaire de manière simple et efficace, et avec un nombre minimal de pièces, à cette exigence.

De manière plus précise, elle a pour objet une timonerie de commande pour dispositif d'accouplement, embrayage par exemple, qui, destinée à être attelée à un moyen de manoeuvre, est du genre comportant, un levier, dit ci-après levier de sortie, qui en forme l'élément de sortie, et, associé audit levier de sortie, globalement dans l'alignement de celui-ci, un rattrapeur d'usure, ledit rattrapeur d'usure comportant lui-même un levier, dit ci-après levier d'actionnement, qui, articulé au levier de sortie, est apte à être solidarisé en rotation à celui-ci par l'intermédiaire de moyens d'encliquetage débrayables, cette timonerie de commande étant d'une manière générale caractérisée en ce que les moyens d'encliquetage interviennent par l'intermédiaire d'un levier supplémentaire, qui est monté pivotant sur le levier d'actionnement, par une articulation distincte de l'articulation de celui-ci au levier de sortie, et qui est en prise par une articulation à jeu avec ledit levier de sortie, en sorte que ce levier supplémentaire constitue un levier de démultiplication.

En pratique, et de manière particulièrement avantageuse, le rattrapeur d'usure à levier de démultiplication suivant l'invention est en quelque sorte intégré au levier de sortie.

Outre qu'une telle disposition conduit à une minimisation du nombre de pièces à mettre en oeuvre, et évite toute sollicitation en torsion de l'arbre correspondant, elle favorise, s'agissant de la commande d'un embrayage, l'adaptation de l'ensemble à des types très divers de véhicule, indépendamment du moyen de manoeuvre mis en oeuvre, la fourchette de débrayage que constitue dans un tel cas le levier de sortie s'apparentant alors avantageusement à une fourchette de débrayage de type usuel.

Les caractéristiques et avantages de l'invention ressortiront d'ailleurs de la description qui va suivre, à titre d'exemple, en référence aux dessins schématiques annexés sur lesquels :

la figure 1 est une vue en élévation-coupe d'une timonerie de commande suivant l'invention, suivant la ligne brisée I-I de la figure 2, pour l'état d'engagement de l'organe d'accouplement commandé ;

la figure 2 est une vue latérale de cette timonerie de commande, suivant la flèche II de la figure 1 ;

la figure 3 est une vue qui, analogue à celle de la figure 1, illustre l'intervention, au sein de cette timonerie de commande, du rattrapeur d'usure dont elle est équipée ;

les figures 4, 5 sont des vues qui, analogues chacune respectivement à celles des figures 1, 2, se rapportent à une variante de mise en oeuvre de la timonerie de commande suivant l'invention ;

les figures 6, 7 sont des vues qui, reprenant chacune respectivement une partie de celles des figures 1, 2, se rapportent à une variante de réalisation ;

la figure 8 est une vue qui reprend, à échelle supérieure, le détail de la figure 6 repéré par un encart VIII sur celle-ci.

Tel que schématisé sur ces figures, il s'agit, à partir d'un moyen de manoeuvre 10, d'agir, par une timonerie de commande 11, sur un organe d'action 12 lui-même propre à agir sur le dispositif d'accouplement, non représenté, à commander.

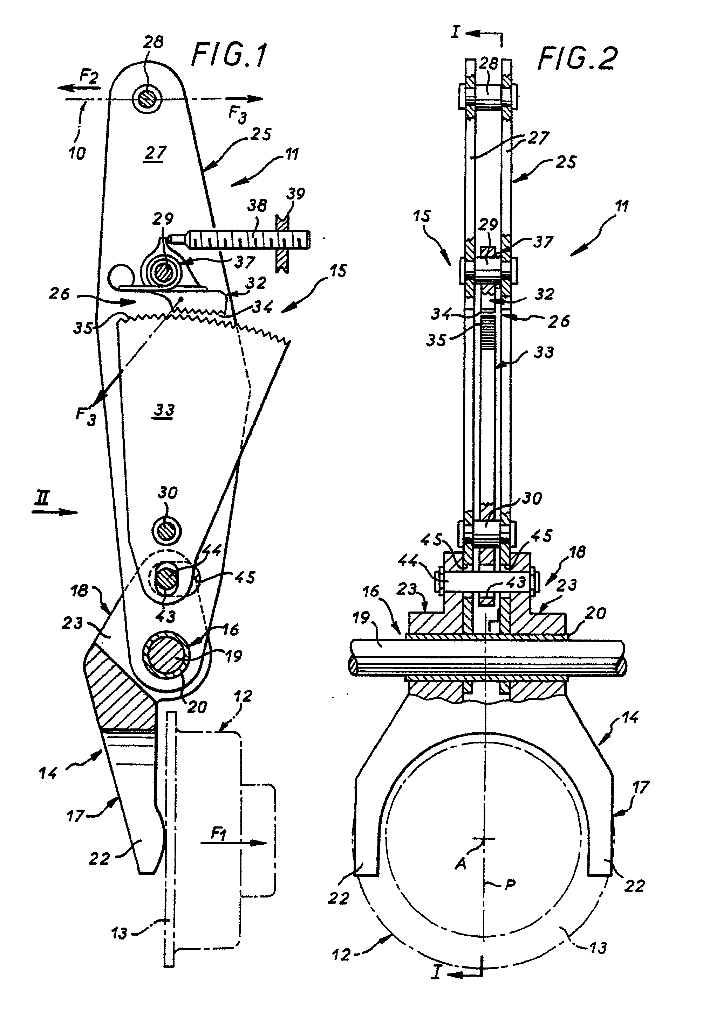

Le moyen de manoeuvre 10 est quelconque, et c'est la raison pour laquelle il n'a été que schématisé par un trait interrompu sur la figure 1.

Il peut s'agir, par exemple, d'un câble, d'une tringle, ou du piston d'un vérin hydraulique.

Quoi qu'il en soit, il est sous le contrôle d'un organe de commande à la disposition de l'usager.

Lorsque, comme en l'espèce, le dispositif d'accouplement à commander est un embrayage, l'organe d'action 12, qui n'a été que schématisé par son seul contour sur les figures, est une butée de débrayage.

Une telle butée de débrayage ne faisant pas partie en soi de la présente invention, elle ne sera pas décrite ici.

Il suffira d'indiquer que, dans la forme de mise en oeuvre illustrée par les figures 1 à 3, il s'agit d'une butée de débrayage de type "poussé", c'est-à-dire d'une butée de débrayage apte à agir en poussée sur le dispositif débrayeur de l'embrayage à commander, suivant la flèche F1 de la figure 1, et que, pour l'action dans le sens correspondant de la timonerie de commande 11, elle présente, radialement, une collerette 13.

Dans la forme de réalisation représentée, cette collerette 13 s'étend circulairement de manière continue, mais elle peut aussi bien se réduire à deux bras ou doigts disposés en positions diamétralement opposées l'un par rapport à l'autre.

De manière connue en soi, la timonerie de commande 11 suivant l'invention, qui est destinée à être attelée au moyen de manoeuvre 10, suivant en pratique une direction qui, tel que schématisé par la flèche F2 de la figure 1, est opposée à celle suivant laquelle l'organe d'action 12 est adapté à agir en poussée sur le dispositif d'accouplement à commander, lorsque, tel que représenté, le moyen de manoeuvre 10 est supposé agir en traction, est du genre comportant, en amont d'un levier 14 formant son élément de sortie, ledit élément de sortie étant celui par lequel elle est elle-même adaptée à agir sur l'organe d'action 12, un rattrapeur d'usure 15.

Tel que représenté, le rattrapeur d'usure 15 est globalement dans l'alignement du levier 14 formant l'élément de sortie de la timonerie de commande 11, ledit levier 14, dit ici par simple commodité levier de sortie, prolongeant globalement ledit rattrapeur d'usure 15.

En pratique, le levier de sortie 14 est monté pivotant sur un support 16, et il présente d'un seul tenant deux bras qui s'étendent chacun respectivement de part et d'autre dudit support 16, l'un, 17, dit ci-après par simple commodité bras d'action, par lequel il est apte à l'actionnement, par l'intermédiaire de l'organe d'action 12, du dispositif d'accouplement à commander, l'autre, 18, dit ci-après par simple commodité bras de manoeuvre, avec lequel est en prise le rattrapeur d'usure 15.

Dans la forme de réalisation plus particulièrement représentée sur les figures 1 à 3, le support 16 est, de manière connue en soi, constitué d'un arbre fixe 19 entouré localement d'un palier 20.

En outre, dans cette forme de réalisation, et de manière également connue en soi, le bras d'action 17 du levier de sortie 14, plus communément appelé fourchette de débrayage lorsque le dispositif d'accouplement à commander est un embrayage, forme une chape dont les doigts 22, pour agir sur ledit organe d'action 12, encadrent l'arbre correspondant.

Cet arbre a été schématisé par la trace de son axe A sur la figure 2, cet axe A étant celui suivant lequel l'organe d'action 12 est appelé à se déplacer pour son action sur le dispositif d'accouplement à commander.

Dans la forme de réalisation représentée, et suivant un aspect de l'invention, le bras de manoeuvre 18 du levier de sortie 14 forme lui aussi une chape dont les deux doigts 23, et il en est de même pour les doigts 22 constitutifs du bras d'action 17 associé, s'étendent de part et d'autre du plan P, qui, passant par l'axe A précédent, tel que schématisé par sa trace en traits interrompus sur la figure 2, est perpendiculaire à l'arbre 19, ce plan P constituant en pratique un plan de symétrie pour l'ensemble.

Le levier de sortie 14 a ainsi globalement une configuration en H.

Le rattrapeur d'usure 15 comporte lui-même un levier 25, dit ici par simple commodité levier d'actionnement, qui est destiné à être attelé au moyen de manoeuvre 10, et qui, articulé au levier de sortie 14, et plus précisément au bras de manoeuvre 18 de celui-ci, est apte à être solidarisé en rotation à ce levier de sortie 14 par l'intermédiaire de moyens d'encliquetage débrayables 26.

Dans les formes de réalisation représentées, et suivant un aspect de l'invention, ce levier d'actionnement 25 est formé de deux flasques 27, de contours identiques l'un à l'autre et parallèles l'un à l'autre, et lesdits flasques 27 sont associés chacun respectivement aux deux doigts 23 de la chape que constitue le bras de manoeuvre 18 du levier de sortie 14.

Pour leur solidarisation l'un à l'autre, les flasques ainsi constitutifs du levier d'actionnement 25 sont reliés l'un à l'autre par trois entretoises 28, 29 et 30, établies à distance l'une de l'autre en étant échelonnées le long d'eux.

Il s'agit en pratique d'entretoises qui présentent chacune un fût épaulé, entre les flasques 27, et, de part et d'autre de ce fût épaulé, des queues de moindre diamètre, qui, traversant chacune le flasque 27 correspondant, sont chacune rivetées au-delà de celui-ci.

Dans la forme de réalisation plus particulièrement représentée sur les figures 1 à 4, les flasques 27 constituant ainsi le levier d'actionnement 25 sont parallèles l'un à l'autre sur la totalité de leur longueur et ils sont conjointement engagés dans la chape que constitue le bras de manoeuvre 18 du levier de sortie 14, en étant chacun respectivement accolés à la face interne correspondante des doigts 23 de cette chape.

Il en résulte que les entretoises 28, 29 et 30 reliant l'un à l'autre ces flasques 27 sont toutes identiques entre elles.

L'entretoise 28 est en pratique établie à proximité de l'extrémité de ces flasques 27 opposée au bras de manoeuvre 18 du levier de sortie 14.

C'est par elle que le levier d'actionnement 25 qu'ils constituent, et donc la timonerie 11, est destiné à être attelé au moyen de manoeuvre 10.

L'entretoise 29 est établie entre les deux extrémités des flasques 27, et l'entretoise 30 est établie du côté de celle de ces extrémités par laquelle ces flasques 27 sont articulés au bras de manoeuvre 18 du levier de sortie 14, mais légèrement à distance de cette extrémité.

En pratique, pour cette articulation, les flasques 27 sont engagés à pivotement, au-delà de l'entretoise 30 par rapport à l'entretoise intermédiaire 29, sur le palier 20 entourant l'arbre 19 constituant avec ce palier 20 le support 16 du levier de sortie 14.

Suivant l'invention, les moyens d'encliquetage 26 interviennent par l'intermédiaire d'un levier de démultiplication 33, qui est lui-même monté pivotant sur le levier d'actionnement 25, et qui est en prise par une articulation à jeu avec le bras de manoeuvre 18 du levier de sortie 14.

En pratique, ils comportent au moins un cliquet 32 monté pivotant sur le levier d'actionnement 25.

Dans les formes de réalisation plus particulièrement représentées sur les figures 1 à 5, seul un tel cliquet 32 est prévu.

Suivant un aspect de l'invention, ce cliquet 32 et le levier de démultiplication 33 s'étendent l'un et l'autre entre les deux flasques 27 constitutifs du levier d'actionnement 25.

En pratique, le cliquet 32, qui présente une denture 34 par laquelle il peut coopérer en engagement avec une denture complémentaire 35 prévue à cet effet, en secteur circulaire, sur la tranche du levier de démultiplication 33, est monté pivotant sur l'entretoise intermédiaire 29 des flasques 27, celle-ci formant pour lui un axe d'articulation.

De préférence, et tel que représenté, pour de meilleures conditions d'arc boutement sur le levier de démultiplication 33, le clique 32 s'étend, par rapport à l'entretoise 29 qui en constitue l'axe d'articulation, du côté du bras d'action 17 du levier de sortie 14 par lequel ce bras d'action 17 est apte à l'actionnement du dispositif d'accouplement à commander, c'est-à-dire, du côté par lequel il est apte à agir sur l'organe d'action 12.

Quoi qu'il en soit, le cliquet 32 est en pratique soumis à un ressort 37 qui le sollicite en permanence en direction, d'une part, de la denture 35 du levier de démultiplication 33, et, d'autre part, d'une butée 38 montée réglable en position sur un support fixe 39.

Dans les formes de réalisation représentées, ce ressort 37 est un ressort de torsion dont l'une des ailes porte sur le cliquet 32 tandis que l'autre est engagée dans un perçage 40 d'un des flasques 27 constitutifs du levier d'actionnement 25.

Quant au levier de démultiplication 33, il est articulé, pour son montage pivotant sur le levier d'actionnement 25, sur l'entretoise 30 reliant les flasques 27 constitutifs de celui-ci, et, pour son articulation à jeu avec le bras de manoeuvre 18 du levier de sortie 14, il est engagé, par une boutonnière 43, à son extrémité opposée à sa denture 35, au-delà de ladite entretoise 30 par rapport à ladite denture 35, sur un axe 44 qui relie l'un à l'autre les deux doigts 23 de la chape que constitue ce bras de manoeuvre 18, et qui est donc porté par celui-ci, cet axe 44 traversant lui-même avec jeu les flasques 27 constitutifs du levier d'actionnement 25 à la faveur de passages allongés en boutonnière 45 prévus à cet effet dans ceux-ci.

Tandis que l'axe 44 est sensiblement au contact des flancs de la boutonnière 43 du levier de démultiplication 33 qu'il traverse, cette boutonnière 43 s'étendant sensiblement radialement par rapport au support 16, il est, dans toutes les directions, à distance des passages allongés en boutonnière 45, qu'il traverse aussi, des flasques 27 constitutifs du levier d'actionnement 25, de façon à ne jamais interférer avec celui-ci.

Ainsi qu'on le notera, le cliquet 32 et le levier de démultiplication 33 constitutifs des moyens d'encliquetage 26 s'étendent sensiblement suivant le plan axial P de symétrie de l'ensemble, et les flasques 27 constitutifs du levier d'actionnement 25 s'étendent eux-mêmes sensiblement de manière symétrique de part et d'autre de ce plan axial de symétrie P, parallèlement à celui-ci, et donc de part et d'autre de l'axe de déplacement A de l'organe d'action 12.

Lorsque le dispositif d'accouplement concerné est en état d'engagement, le cliquet 32 est en appui contre sa butée 38, à distance de la denture 35 du levier de démultiplication 33, figure 1.

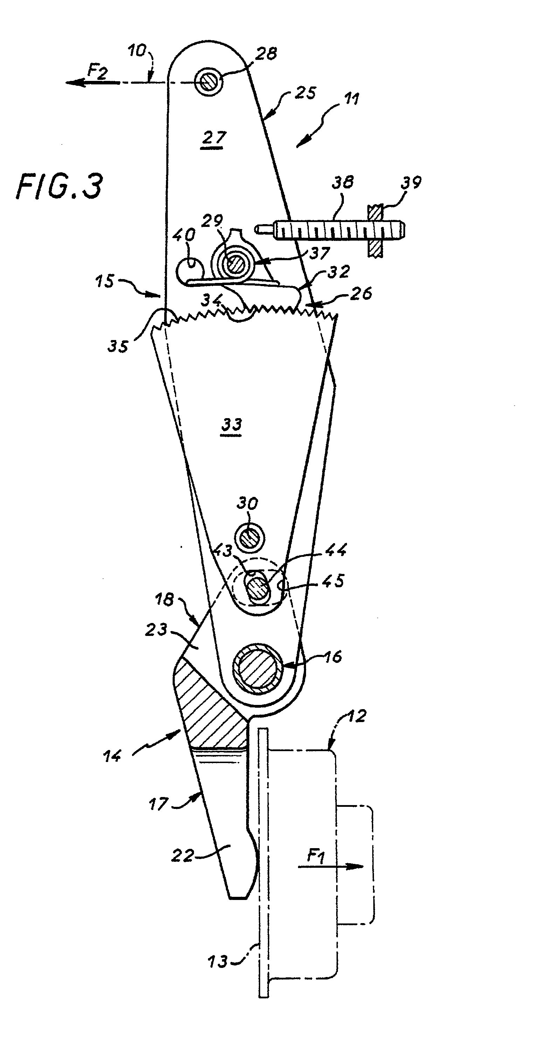

Lorsque, pour le passage à l'état de dégagement de ce dispositif d'accouplement, une action est exercée à cet effet par le moyen de manoeuvre 10 sur la timonerie 11, et plus précisément sur le levier d'actionnement 25 que comporte celle-ci, suivant la flèche F2 de la figure 1, ce levier d'actionnement 25, alors libre par rapport au reste de la timonerie 11, pivote d'abord seul autour du support 16, en entraînant avec lui le levier de démultiplication 33, qui, cependant, en raison de l'axe 44, pivote alors autour de l'entretoise 30, jusqu'à ce que, le cliquet 32, libéré par la butée 38, vienne en prise avec ce levier de démultiplication 33 sous la sollicitation de son ressort 37, figure 3.

A compter de cet instant, le levier de démultiplication 33 se trouve solidarisé en rotation au levier d'actionnement 25, et, par ce levier de démultiplication 33 et l'axe 44, il en est de même pour le levier de sortie 14 ; l'action du moyen de manoeuvre 10 étant poursuivie, ce levier de sortie 14 agit alors, comme recherché, sur l'organe d'action 12, suivant la flèche F1 des figures 1 et 3.

Lors du retour à l'état d'engagement du dispositif d'accouplement concerné, l'ensemble de la timonerie 11 revient à sa position initiale, mais, au fur et à mesure de l'usure des garnitures de frottement que comporte ce dispositif d'accouplement, et sous la sollicitation rétrograde de poussée alors exercée par l'organe d'action 12 sur le levier de sortie 14, et transmise par celui-ci et l'axe 44 au levier de démultiplication 33, la zone de la denture 35 de ce levier de démultiplication 33 au droit de laquelle se trouve au repos le cliquet 32 se déplace progressivement le long de cette denture 35, ce qui assure le rattrapage d'usure recherché.

Du fait que, dans ce qui précède, le support 16 du levier de sortie 14 comporte un arbre, la timonerie 11 peut intervenir sur l'organe d'action 12 aussi bien dans son sens, en poussée, comme décrit ci-dessus, que dans le sens opposé, c'est-à-dire en traction.

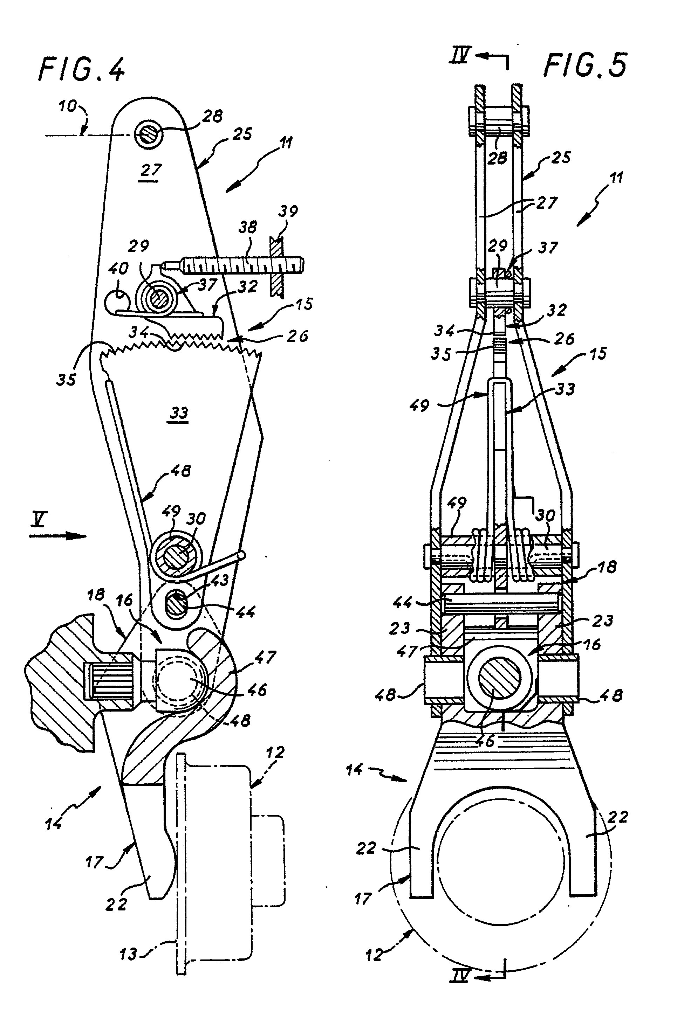

Il n'en est pas de même dans la variante de mise en oeuvre illustrée par les figures 4 et 5, le support 16 étant alors constitué par une rotule 46.

Dans ce cas, seule une action dans un sens est envisageable sur l'organe d'action 12, par exemple en poussée, comme précédemment.

Dans cette forme de mise en oeuvre, la portion médiane 47 du levier de sortie 14 est évidemment profilée de manière à coopérer en pivotement avec la rotule 46 constituant le support 16.

En outre, dans cette forme de mise en oeuvre, les flasques 27 constitutifs du levier d'actionnement 25 encadrent la chape que forme le bras de manoeuvre 18 de ce levier de sortie 14, en étant chacun respectivement accolés à la face externe correspondante des doigts 23 de cette chape.

En pratique, ces doigts 23 portent alors chacun un bout d'arbre 48 sur lequel est monté pivotant le flasque 27 correspondant du levier d'actionnement 25.

Corollairement, ces flasques 27 ne sont parallèles l'un à l'autre qu'à chacune de leurs extrémités, leur écartement à leur extrémité opposée au levier de sortie 14 étant moindre que leur écartement à celle de leurs extrémités par laquelle ils coopèrent avec ce levier de sortie 14.

L'entretoise 30 correspondante a donc dans ce cas une longueur supérieure à celle des entretoises 28, 29.

Enfin, dans cette variante de mise en oeuvre, il est prévu, entre le levier de démultiplication 33 et le levier d'actionnement 25, un ressort 49 propre à solliciter en permanence le levier de sortie 14 en appui contre l'organe d'action 12, et, par là, à maintenir en permanence celui-ci au contact du dispositif d'accouplement à commander.

Il s'agit, dans la forme de réalisation représentée, d'un ressort de torsion qui est engagé sur un palier 49 entourant l'entretoise 30, et dont une aile porte sur le levier de démultiplication 33 tandis que l'autre prend appui sur le levier d'actionnement 25.

Pour le reste, les dispositions sont identiques aux précédentes, et le fonctionnement est le même.

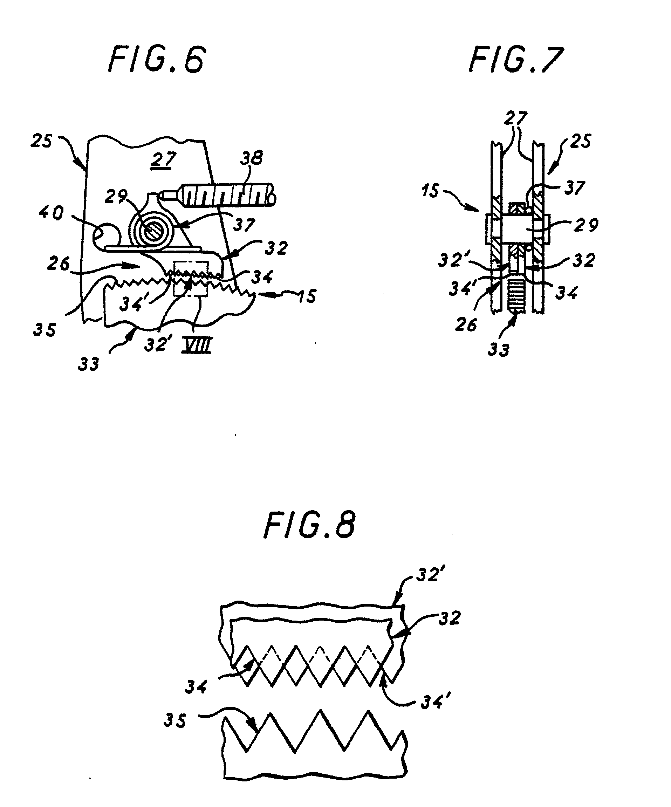

Dans la variante de réalisation illustrée par les figures 6 à 8, deux cliquets 32, 32' sont mis en oeuvre, en étant chacun montés pivotants sur un même axe de pivotement, constitué, comme précédemment, par l'entretoise 29.

Les dentures 34, 34' de ces cliquets 32, 32' sont identiques l'une à l'autre, mais elles sont circonférentiellement décalées d'une demi-dent l'une par rapport à l'autre.

Grâce à une telle disposition, se trouve pallié le risque que les dents d'un tel cliquet 32, 32' viennent en contact avec le sommet des dents du levier de démultiplication 33 associé.

En effet, dans une telle éventualité, les dents de l'autre cliquet 32, 32' sont alors en toute certitude correctement en prise avec celles du levier de démultiplication 33.

Dans la forme de réalisation représentée, les deux cliquets 32, 32' ainsi mis en oeuvre sont superposés l'un à l'autre, et sont donc directement au contact l'un de l'autre.

Bien entendu, la présente invention ne se limite pas aux formes de mise an oeuvre décrites et représentées, mais englobe toute variante de réalisation et/ou de combinaison de leurs divers éléments.

En particulier, le ressort prévu dans la forme de mise en oeuvre illustrée par les figures 4 et 5 pour assurer un appui permanent entre le levier de sortie et l'organe d'action à commander peut également être prévu pour la forme de mise en oeuvre illustrée par les figures 1 à 3.

En outre, dans le cas où il n'existe pas déjà par ailleurs dans la timonerie un ressort propre à assurer que, pour l'état d'engagement, le cliquet 32 est bien en appui contre sa butée 38, et, donc, est bien dégagé du levier de démultiplication 33, il est de préférence prévu un ressort spécifique à cet effet.

Par exemple, et tel que schématisé par la flèche F3 à la figure 1, ce ressort peut être attelé à l'entretoise 28, en étant par ailleurs attelé au bâti 39.

En variante, tel que schématisé par la flèche F'3, il peut être attelé, par exemple, en biais au cliquet 32 ; le ressort 37 associé à celui-ci n'est alors plus nécessaire, ce ressort en assurant alors conjointement la fonction.

Quoi qu'il en soit, et ainsi qu'on le notera, l'ensemble de la timonerie de commande suivant l'invention s'apparente avantageusement à une fourchette de débrayage classique, le rattrapeur d'usure qu'elle comporte étant en quelque sorte intégré à celui des bras d'une telle fourchette opposé à celui par lequel elle est adaptée à agir sur un organe d'action.

Il en est d'autant plus ainsi, que, destiné à être attelé au moyen de manoeuvre concerné, le levier d'actionnement que comporte ce rattrapeur d'usure forme avantageusement directement par lui-même l'élément d'entrée de l'ensemble de la timonerie de commande suivant l'invention.

Par ailleurs, ce levier d'actionnement, notamment, peut être plus ou moins coudé, et/ou le moyen de manoeuvre concerné, au lieu d'agir en traction sur lui, peut aussi bien agir en poussée.

En outre, le domaine d'application de l'invention n'est pas limité à celui des seules butées de débrayage de type "poussé", mais s'étend au contraire aussi bien à celui des butées de débrayage de type "tiré", aptes à agir en traction, et non plus en poussée, sur le dispositif débrayeur de l'embrayage à commander.

## Revendications

1. Timonerie de commande pour dispositif d'accouplement, embrayage par exemple, qui, destinée à être attelée à un moyen de manoeuvre (10), est du genre comportant, un levier (14), dit ci-après levier de sortie, qui en forme l'élément de sortie, et, associé audit levier de sortie (14), globalement dans l'alignement de celui-ci, un rattrapeur d'usure (15), ledit rattrapeur d'usure (15) comportant lui-même un levier (25), dit ci-après levier d'actionnement, qui, articulé au levier de sortie (14), est apte à être solidarisé en rotation à celui-ci par l'intermédiaire de moyens d'encliquetage débrayables (26), caractérisée en ce que les moyens d'encliquetage (26) interviennent par l'intermédiaire d'un levier supplémentaire (33), qui est monté pivotant sur le levier d'actionnement (25), par une articulation (30) distincte de l'articulation (19) de celui-ci au levier de sortie (14), et qui est en prise par une articulation à jeu (43, 44) avec ledit levier de sortie (14), en sorte que ce levier supplémentaire (33) constitue un levier de démultiplication.

2. Timonerie suivant la revendication 1, caractérisée en ce que, le levier de sortie (14) étant monté pivotant sur un support (16) et présentant d'un seul tenant deux bras, qui s'étendent chacun respectivement de part et d'autre dudit support (16), et par l'un (17) desquels, dit ci-après par simple commodité bras d'action, il est apte à l'actionnement du dispositif d'accouplement à commander, le levier de démultiplication (33) est en prise par l'articulation à jeu (43, 44), avec l'autre (18) desdits bras, dit ci-après bras de manoeuvre, dudit levier de sortie (14).

3. Timonerie suivant la revendication 2, caractérisée en ce que l'articulation à jeu (43, 44) comporte un axe (44), qui est porté par le bras de manoeuvre (18) du levier de sortie (14), et une boutonnière (43) par laquelle le levier de démultiplication (33) est engagé sur ledit axe (44), et qui s'étend sensiblement radialement par rapport au support (16).

4. Timonerie suivant la revendication 2, caractérisée en ce que le bras de manoeuvre (18) du levier de sortie (14) forme une chape, et le levier d'actionnement (25) du rattrapeur d'usure (15) est formé de deux flasques (27) associés chacun respectivement aux deux doigts (23) de ladite chape.

5. Timonerie suivant la revendication 4 caractérisée en ce que les flasques (27) constitutifs du levier d'actionnement (25) sont engagés dans la chape que constitue le bras de manoeuvre (18) du levier de sortie (14).

6. Timonerie suivant la revendication 4, caractérisée en ce que les flasques (27) constitutifs du levier d'actionnement (25) encadrent la chape que constitue le bras de manoeuvre (18) du levier de sortie (14).

7. Timonerie suivant l'une quelconque des revendications 5, 6, caractérisée en ce que l'axe (44) relie l'un à l'autre les doigts (23) de la chape que constitue le bras de manoeuvre (18) du levier de sortie (14) et il traverse avec jeu les flasques (27) constitutifs du levier d'actionnement (25).

8. Timonerie suivant l'une quelconque des revendications 4 à 6, caractérisée en ce que le levier de démultiplication (33) s'étend entre les deux flasques (27) constitutifs dudit levier d'actionnement (25).

9. Timonerie suivant la revendication 8, caractérisée en ce que, les moyens d'encliquetage (26) comportant au moins un cliquet (32) monté pivotant sur le levier d'actionnement (25), ledit cliquet (32) s'étend lui aussi entre les deux flasques (27) constitutifs dudit levier d'actionnement (25).

10. Timonerie suivant l'une quelconque des revendications 4 à 9, caractérisée en ce que les flasques (27) constitutifs du levier d'actionnement (25) s'étendent de part et d'autre de l'axe de déplacement de l'organe d'action.

11. Timonerie suivant l'une quelconque des revendications 2 à 10, caractérisée en ce que, les moyens d'encliquetage (26) comportant au moins un cliquet (32) monté pivotant sur le levier d'actionnement (25), ledit cliquet (32) s'étend, par rapport à son axe de pivotement (29), du côté du bras d'action (17) du levier de sortie (14) par lequel ledit bras d'action (17) est apte à l'actionnement du dispositif d'accouplement à commander.

12. Timonerie suivant l'une quelconque des revendications 1 à 11, caractérisée en ce que les moyens d'encliquetage (26) comportent deux cliquets (32, 32'), qui sont chacun montés pivotants sur un même axe de pivotement (29), et dont les dentures (34, 34') respectives, qui sont identiques l'une à l'autre, sont circonférentiellement décalées d'une demi-dent l'une par rapport à l'autre.

13. Timonerie suivant l'une quelconque des revendications 1 à 12, caractérisée en ce que le levier d'actionnement (25) du rattrapeur d'usure (15) forme l'élément d'entrée de l'ensemble, ledit levier d'actionnement (25) étant destiné à être attelé au moyen de manoeuvre (10) concerné.

14. Timonerie suivant l'une quelconque des revendications 1 à 11, caractérisée en ce que le levier de sortie (14) a globalement une configuration en H.

## Claims

1. A control mechanism for a coupling device such as a clutch, adapted to be coupled with manoeuvring means (10) and being of the kind comprising a lever (14), hereinafter referred to as an output lever and constituting the output element of the mechanism, a wear compensator (15) assiociated with the said output lever (14) and generally in alignment with the latter, the said wear compensator (15) itself comprising a lever (25), hereinafter referred to as the actuating lever, which is pivoted to the output lever (14) and which is adapted to be secured to the latter for rotation therewith by a disengageable ratchet means (26), characterised in that the ratchet means (26) act through a supplementary lever (33) which is pivotally mounted on the actuating lever (25) by means of pivot (30), which is separate from the pivot (19) whereby the actuating lever is pivoted to the output lever (14), the supplementary lever being engaged with the said output lever (14) through a loose pivot (43, 44) defining a clearance whereby the said supplementary lever (33) constitutes a demultiplication lever.

2. A mechanism according to Claim 1, characterised in that the output lever (14) is pivotally mounted on a support (16), and has two integral arms which extend respectively on either side of the said support (16) whereby the support lever is adapted to actuate the coupling device being controlled by means of one of the said arms (17), hereinafter referred to for simple convenience as the action arm, the multiplication lever (33) being in engagement through the loose pivot (43, 44) with the other one (18) of the said arms, hereinafter referred to as the manoeuvring arm, of the said output lever (14).

3. A mechanism according to Claim 2, characterised in that the loose pivot (43, 44) includes a spindle (44) which is carried by the manoeuring arm (18) of the output lever (14), and a slot (43) whereby the multiplication lever (33) is engaged on the said spindle (44), the said slot extending substantially radially with respect to the said support (16).

4. A mechanism according to Claim 2, characterised in that the manoeuvring arm (18) of the output lever (14) is forked, and the actuating lever (25) of the wear compensator (15) comprises two plates (27), each of which is associated with a respective one of the two fingers (23) of the said fork.

5. A mechanism according to Claim 4, characterised in that the plates (27) constituting the actuating lever (25) are engaged in the fork constituted by the manoeuvring arm (18) of the output lever (14).

6. A mechanism according to Claim 4, characterised in that the plates (27) constituting the actuating lever (25) embrace the fork constituted by the manoeuvring arm (18) of the output lever (14).

7. A mechanism according to either one of Claims 5 and 6, characterised in that the spindle (44) connects the fingers (23) of the fork constituted by the manoeuvring arm (18) of the output lever (14) to each other, and extends with a clearance through the plates (27) that constitute the actuating lever (25).

8. A mechanism according to any one Claims 4 to 6, characterised in that the demultiplication lever (33) extends between the two plates (27) constituting the said actuating lever (25).

9. A mechanism according to Claim 8, characterised in that the ratchet means (26) comprise at least one ratchet (32) pivotally mounted on the actuating lever (25), the said ratchet (32) extending between the two plates (27) constituting the said actuating lever (25).

10. A mechanism according to any one of Claims 4 to 9, characterised in that the plates (27) constituting the actuating lever (25) extend on either side of the axis of displacement of the action member.

11. A mechanism according to any one of Claims 2 to 10, characterised in that the ratchet means (26) comprise at least one ratchet (32) pivotally mounted on the actuating lever (25), the said ratchet (32) extending, with respect to its pivot axis (29), on the side of the action arm (17) of the output lever (14) by which the said action arm (17) is arranged to actuate the coupling device being controlled.

12. A mechanism according to any one of Claims 1 to 11, characterised in that the ratchet means (26) comprise two ratchets (32, 32'), each of which is mounted pivotally on a pivot axis (29) common to both ratchets, the respective teeth (34, 34') of the ratchets, which are identical to each other, being circumferentially offset by one half tooth width with respect to each other.

13. A mechanism according to any one of Claims 1 to 12, characterised in that the actuating lever (25) of the wear compensator (15) constitutes the input element of the assembly, the said actuating lever (25) being adapted to be coupled with the said manoeuvring means (10).

14. A mechanism according to any one of Claims 1 to 11, characterised in that the output lever (14) is generally of H-shaped configuration.

**Patentansprüche**

1. Betätigungsgestänge für Ein- und Ausrückvorrichtung, z.B. für Kupplungen, bestimmt für die Ankopplung an ein Betätigungsmittel (10) und von der Art, die einen Hebel (14) enthält, der nachstehend als Abtriebshebel bezeichnet wird und das Antriebselement des Gestänges bildet, und, in Verbindung mit dem genannten Abtriebshebel (14) im wesentlichen damit ausgefluchtet eine Verschleißausgleichsvorrichtung (15), die wiederum einen Hebel (25) besitzt, der nachstehend als Betätigungshebel bezeichnet wird und der, gelenkig am Abtriebshebel (14) angebracht, zur drehbeweglichen Anbringung an demselben mit Hilfe von ausrückbaren Schaltklinkenmitteln (26) geeignet ist, dadurch gekennzeichnet, daß die Schaltklinkenmittel (26) über einem Zusatzhebel (33) wirksam werden, der schwenkbar am Betätigungshebel (25) mit Hilfe eines Gelenks (30) angebracht ist, welches sich von dem Gelenk (19) am Abtriebshebel (14) unterscheidet und der über ein mit Spiel versehenes Gelenk (43, 44) mit dem genannten Abtriebshebel (14) so in Eingriff steht, daß dieser Zusatzhebel (33) einen Untersetzungshebel bildet.

2. Gestänge nach Anspruch 1, dadurch gekennzeichnet, daß der Abtriebshebel (14) schwenkbar an einer Stütze (16) angebracht ist und zwei aus einem Stück damit bestehende Arme enthält, die sich jeweils beiderseits der genannten Stütze (16) erstrecken und mit Hilfe des einen (17), des nachstehend der Einfachheit halber als Betätigungsarm bezeichneten Arms, zur Betätigung der Kopplungsvorrichtung geeignet ist, wobei der Untersetzungshebel (33) über das mit Spiel versehene Gelenk (43, 44) mit dem anderen (18) der genannten Arme, dem nachstehend als Manövrierarm bezeichneten Arm des genannten Abtriebshebels (14), in Eingriff steht.

3. Gestänge nach Anspruch 2, dadurch gekennzeichnet, daß das mit Spiel versehene Gelenk (43, 44) eine Achse (44) aufweist, die auf dem Manövrierarm (18) des Abtriebshebels (14) aufliegt, und eine längliche Aussparung (43), über die der Untersetzungshebel (33) mit der genannten Achse (44) in Eingriff steht und die sich im wesentlichen radial zur Stütze (16) erstreckt.

4. Gestänge nach Anspruch 2, dadurch gekennzeichnet, daß der Manövrierarm (18) des Abtriebshebels (14) eine Kappe bildet und daß der Betätigungshebel (25) der Verschleißausgleichsvorrichtung (15) aus zwei Flanschen (27) besteht, die jeweils mit den beiden Fingern (23) der genannten Kappe verbunden sind.

5. Gestänge nach Anspruch 4, dadurch gekennzeichnet, daß die den Betätigungshebel (25) bildenden Flansche (27) in die Kappe eingreifen, die durch den Manövrierhebel (18) des Abtriebshebels (14) gebildet wird.

6. Gestänge nach Anspruch 4, dadurch gekennzeichnet, daß die den Betätigungshebel (25) bildenden Flansche (27) die Kappe umschließen, die durch den Manövrierarm (18) des Abtriebshebels (14) gebildet wird.

7. Gestänge nach einem der Ansprüche 5, 6, dadurch gekennzeichnet, daß die Achse (44) die beiden Finger (23) der Kappe miteinander verbindet, die von dem Manövrierarm (18) des Abtriebshebels (14) gebildet wird, und sie mit Spiel durch die Flansche (27) hindurchtritt, die den Betätigungshebel (25) bilden.

8. Gestänge nach einem der Ansprüche 4 bis 6, dadurch gekennzeichnet, daß sich der Untersetzungshebel (33) zwischen den beiden Flanschen (27) erstreckt, woraus der genannte Betätigungshebel (25) besteht.

9. Gestänge nach Anspruch 8, dadurch gekennzeichnet, daß die Schaltklinkenmittel (26) wenigstens eine Sperrklinke (32) enthalten, die schwenkbar am Betätigungshebel (25) befestigt ist, wobei die genannte Sperrklinke (32) sich ebenfalls zwischen den beiden Flanschen (27) erstreckt, die den genannten Betätigungshebel (25) bilden.

10. Gestänge nach einem der Ansprüche 4 bis 9, dadurch gekennzeichnet, daß die den Betätigungshebel (25) bildenden Flansche (27) sich beiderseits der Verschiebungsachse des Betätigungsorgans erstrecken.

11. Gestänge nach einem der Ansprüche 2 bis 10, dadurch gekennzeichnet, daß die Schaltklinkenmittel (26) wenigstens eine Sperrklinke (32) enthalten, die schwenkbar am Betätigungshebel (25) angebracht ist, wobei die genannte Sperrklinke (32) sich im Verhältnis zur Schwenkachse (29) von der Seite des Betätigungshebels (17) des Abtriebshebels (14) aus erstreckt, von der aus der genannte Betätigungshebel (17) zur Betätigung der Kopplungsvorrichtung geeignet ist.

12. Gestänge nach einem der Ansprüche 1 bis 11, dadurch gekennzeichnet, daß die Schaltklinkenmittel (26) zwei Sperrklinken (32, 32') enthalten, die jeweils schwenkbar an der gleichen Drehachse (29) angebracht sind und deren entsprechende Verzahnungen (34, 34'), die miteinander identisch sind, am Umfang im Verhältnis zueinander um einen halben Zahn versetzt sind.

13. Gestänge nach einem der Ansprüche 1 bis 12, dadurch gekennzeichnet, daß der Betätigungshebel (25) der Verschleißausgleichsvorrichtung (15) das Eingangselement der gesamten Einheit bildet, wobei der genannte Betätigungshebel (25) dazu bestimmt ist, an das betreffende Betätigungsmittel (10) angekoppelt zu werden.

14. Gestänge nach einem der Ansprüche 1 bis 11, dadurch gekennzeichnet, daß der Abtriebshebel (14) eine im wesentlichen H-förmige Konfiguration hat.

FIG.1

FIG.2

FIG.3

FIG.4

FIG.5

FIG.6

FIG.7

FIG.8